# EUROPÄISCHE PATENTSCHRIFT

(11) **EP 0 540 815 B1**
(45) Veröffentlichungstag und Bekanntmachung des Hinweises auf die Patenterteilung: **22.03.1995**
(21) Anmeldenummer: 92109414.0
(22) Anmeldetag: 04.06.1992
(51) Int. Cl.: H01B 7/28

(54) **Quellfähige Kabelbandage und Verfahren zu ihrer Herstellung**
Swellable cable binding and method for producing it
Bandage gonflable pour câbles et procédé pour le fabriquer

(30) Priorität: 17.10.1991 DE 4134370
(43) Veröffentlichungstag der Anmeldung: 12.05.1993
(73) Patentinhaber: Firma Carl Freudenberg, 69469 Weinheim (DE)
(72) Erfinder: Buchwald, Holger, W-6944 Hemsbach (DE); Schaffert, Ingrid, W-6944 Hirschberg-Leutershausen (DE); Schäfer, Werner, W-6943 Birkenau (DE)

(56) Entgegenhaltungen:
- EP-A- 0 269 778
- EP-A- 0 271 171
- FR-A- 2 500 203

## Beschreibung

Die Erfindung befaßt sich mit einer quellfähigen Kabelbandage in einer Ausgestaltung gemäß dem Oberbegriff des ersten Sachanspruchs sowie mit einem Verfahren zur Herstellung einer solchen Kabelbandage.

Vliesstoff-Kabelbandagen bestehen in der Regel aus einer Trägerschicht aus festem, dünnem Vliesstoff, der einen einseitigen Auftrag aus einem Quellmedium enthält. Dies ist ein bei Wasserzutritt schlagartig um ein Vielfaches seines Ausgangsvolumens quellfähiges Puder und besteht zum Beispiel aus dem vernetzten Natriumsalz einer Polyacrylsäure. Im folgenden wird es mit dem üblichen Ausdruck "Superabsorber" benannt, siehe EP-269788.

Ohne eine solche Quellbandage entstehen Kurzschlüsse beim Eindringen von Feuchtigkeit in elektrischen Hochspannungskabeln oder Fernmeldekabeln durch beim Verlegen oft unvermeidliche Beschädigungen des Mantels (Abscherung, Abknickung). Es kann dabei geschehen, daß in mehradrigen Kabeln eine Papierisolierung durchnäßt wird oder eingedrungenes Wasser sich zwischen Kabelseele und -mantel und zwischen den Adern selbst in Längsrichtung des Kabels ausbreitet. Durch Isolationsfehler können dann diese Adern kurzschlußartig über das Wasser im Bereich von Verbindungen und Abzweigungen an Erdpotential zu liegen kommen.

Um diese Längsausbreitung des Wassers aufzuhalten, ist dessen möglichst rasche Aufnahme durch die Bandage erforderlich. Bei Mittel- und Hochspannungskabeln kommt einer Bandage ferner die Aufgabe zu, unter allen mechanischen und thermischen Einflüssen auf das Kabel mittels einer durch Ruß erzeugten, halbleitenden Eigenschaft einen elektrischen Kontakt zwischen einer im Kabel vorhandenen, halbleitenden Zwischenschicht und der metallisch leitenden Abschirmung zu gewährleisten.

Die Bandagen werden bei der Konfektionierung der Kabel auf diese unter hoher Zugspannung, mit Steigung oder längs, äußerst straff aufgewickelt. Die Breite eines Bandes beträgt häufig 1 bis 15 cm, jedoch sind beliebige Sonderkonfektionen möglich. Auch die Dicke kann von 0,3 bis 1 mm variieren, ohne für Spezialfälle kleinere oder größere Werte, z. B. für minderwertige Kabelqualität mit größeren inneren Hohlräumen, auszuschließen.

Um bei der Herstellung und der Handhabung der Bandage zu verhindern, daß der Superabsorber durch Biege- und Walkvorgänge oder aufgrund mechanischer Einflüsse sich ablöst, werden z.B. Abdeckungen aus hauchdünnem Vliesstoff verwendet. Diese Maßnahme birgt jedoch den Nachteil in sich, daß sie das Aufquellen des Superabsorbers erheblich behindert als Folge des geringen zur Verfügung stehenden Freiraumes zum Quellen, den die Abdeckung bietet. Die Abdeckung verhindert zudem, daß sich die Bandage beim Quellen in enge Hohlräume, Hinterschneidungen und Rillen der Bandage ausbreiten kann. Solche Hohlräume und Rillen liegen oft im Inneren komplizierter Kabelsysteme ("Kammerkabel") vor; ein Wasserzutritt wird in diesen Bereichen also nicht ausreichend gestoppt.

Unter der Bezeichnung 3 E 111, Hersteller: Firma LANTOR BV, Niederlande, ist eine Kabelbandage im Handel erhältlich, bei der 15 bis 40 g/m² Superabsorber mittels eines Bindemittels auf einem dünnen, hochfesten Vliesstoffträger fixiert sind. Das Ablösen des Quellmittels wird dadurch verhindert, daß im Verhältnis zur Superabsorber-Menge große Mengen eines Bindemittels ganzflächig auf den Trägervliesstoff aufgetragen sind. Zur besseren Einbindung des Superabsorbers wird dieser über Kalanderwalzen in das Bindemittel eingedrückt.

Auch bei dieser Ausführung, welche ohne separate Abdeckung des Superabsorbers auskommt und bei der wesentliche Teile des Quellmediums freiliegen, besteht der Nachteil des deutlich verzögerten Quellens bei Wasserzutritt: Innerhalb einer Minute sind erst weit unter 90 % der endgültigen Quellhöhe erreicht, da das Quellmedium sich zunächst aus der Bindemittel-Einbettung durch den eigenen Quelldruck befreien muß.

Einer Verringerung des Bindemittels sind Grenzen gesetzt insofern, als bei zu wenig Bindemittelauftrag der Superabsorber bei Transport oder Handhabung sofort in erheblichem Maße auspudern würde.

Ausgehend vom letztgenannten Stand der Technik liegt die Aufgabe der Erfindung darin, eine gattungsgemäße Kabelbandage mit einer für Wasser frei zugänglichen Superabsorber-Fläche anzugeben, die ohne Abdeckung auskommt und weder bei der Konfektionierung noch bei der Anwendung durch Biege-, Knick- und abrasive Einflüsse Superabsorber aus dem Verbund freigibt. Dessenungeachtet soll die Bandage bei Wasserzutritt im freien Zustand innerhalb einer Minute mindestens 90 % ihrer Endquellhöhe erreicht haben.

Die Bandage soll ferner im gequollenen Zustand auch kleinere Hinterschneidungen, Hohlräume und Rillen im System des Kabelinneren ausfüllen. Ferner soll sie gemäß den Anforderungen der Kabelhersteller gegebenenfalls einen Flächendurchgangswiderstand von höchstens 5 000 Ohm.cm² aufweisen, gemessen nach DIN 53 482/VDE 0303, Teil 3.6, Ausgabe 5 (1983). Ferner soll ein Herstellungsverfahren angegeben werden, um das Bindemittel-Druckmuster zu erzeugen.

Die Lösung dieser Aufgabe besteht in einer Kabelbandage mit den kennzeichnenden Merkmalen des ersten Patentanspruchs sowie in zwei Verfahren zur Herstellung, wie sie in den Verfahrensansprüchen gekennzeichnet sind. Vorteilhafte Ausgestaltungen sind in den Unteransprüchen aufgezeigt.

Die Basis der erfindungsgemäßen Bandage bildet die an sich bekannte, im Interesse der Verarbeitbarkeit möglichst dünne und in ihrer Längsrichtung hoch zugfeste Vliesstoffschicht (Längsfestigkeit von 150 bis 200 N/5cm).

Der Superabsorber in Auftragsmengen von 15 bis 40 g/m² ist auf einer Fläche des Vliesstoffträgers fixiert mittels einer höchstens (im trockenen Zustand) 3 g/m² betragenden Bindemittelmenge. Dieses Bindemittel ist flächig aufgetragen und kann wasserlöslich (z.B. Polyvinylalkohol) oder nicht wasserlöslich (z.B. Polyacrylat) sein.

Gemäß der Erfindung liegt ein zweiter Bindemittelauftrag als gleichmäßiges, sich wiederholendes Druckmuster vor, welches 10 bis 20 % der Superabsorber-Fläche abdeckt. Das Druckmuster hat die Form von Punkten, Linien oder Stegen.

Eine solche Kabelbandage quillt im Zustand einer freien, scheibenförmigen Testprobe bei Wassereinwirkung schon nach einer Minute um mindestens 90 % des Endwertes der Quellhöhe auf, d.h. die Quellung erfolgt sofort und binnen einer Minute nahezu vollständig.

Liegt die bedruckte Fläche unter dem angegebenen Prozentbereich, so wird eine signifikante Erhöhung des Abriebs und Auspuderns von Quellmittel zu beobachten sein. Beim Überschreiten des oberen Grenzwertes der Flächenbedeckung wird die Quellung immer stärker behindert; es tritt eine Verzögerung der Quellung auf, und der zeitliche Quellungsverlauf nähert sich demjenigen des Standes der Technik, d.h. bei vollflächigem Bindemittelauftrag auf dem Superabsorber.

Die erfindungsgemäße Kabelbandage vermag bei Wasserzutritt auch in Hohlräume und Rillen von Kammerkabeln sofort einzudringen und sie auszufüllen.

Überraschend ist, daß trotz der großen Anteile nicht mit Bindemittel bedeckten oder damit in Berührung kommenden Superabsorbers keine Ablösung desselben stattfindet, weder während der Konfektionierung noch während der Lagerung oder Wicklung der Bandage. Auch einer abrasiven Einwirkung hält sie sehr gut stand, ohne nennenswert auszupudern; sie ist ebenso abriebfest wie die vollflächig mit Bindemittel versehen Bandage des Standes der Technik.

Der Bindemittel-Aufdruck kann in einer Variante der erfindungsgemäßen Ausgestaltung als in Richtung der Vliesstoffoberfläche aufgedrücktes Muster vorliegen, welches mit den Superabsorber-Partikeln eine im wesentlichen ebene Oberfläche bildet. Erstaunlicherweise ist auch diese Variante sehr abriebfest.

Vermutlich liegt dies daran, daß hier eine besonders glatte Oberfläche vorhanden ist. Sowohl die Superabsorber-Partikeln als auch das Druckmuster sind zu einer kompakten Fläche verdichtet.

Alle erfindungsgemäßen Ausführungen der Kabelbandage können auch elektrisch leitfähig ausgerüstet sein. Dabei sind sowohl in die Vliesstoff-Trägerschicht als auch in das Bindemittel des Druckmuster-Auftrags Rußpartikel homogen eingelagert. Ohne weiteres erhält man einen einheitlichen Flächendurchgangswiderstand R_{A} nach DIN 53 482/VDE 0303, Teil 3.6, Ausgabe 5 (1983), der gemäß den häufigsten Anforderungen der Kabelindustrie höchstens 5 000 Ohm.cm² betragen darf.

Es ist bekannt, zum Ausbilden solcher (halb)leitenden Eigenschaften das Bindemittel sowie die Vliesstoffträgerschicht jeweils zu 50 bis 200 Gew.-% (trocken) homogen mit Ruß zu versehen. Dessen Teilchengröße liegt dabei im allgemeinen zwischen 0,001 und 0,1 mm.

Die Herstellung der erfindungsgemäßen Kabelbandage geschieht in einer Verfahrensvariante dadurch, daß man auf eine Fläche eines Vliesstoff-Trägers höchstens 3 g/m² (trocken gemessen) eines Bindemittels aufsprüht oder als wäßrige Schaummischung aufträgt.

Die Längsfestigkeit des Vliesstoffs sollte zwischen 150 und 200 N/5 cm liegen, um die Bandage fest wickeln zu können. Innerhalb dieser Anforderungen soll das Trägermaterial natürlich möglichst dünn sein, damit es auch um enge Krümmungen des Kabels fest gewickelt werden kann.

Soll die Bandage elektrisch halbleitend ausgebildet werden, so lagert man bei der Vliesstoffherstellung in den Faserverbund in bekannter Weise homogen 50 bis 200 Gew.-% Ruß ein.

Das Bindemittel zum Befestigen des Quellpuders auf dem Vliesstoff wird als 5 %ige wäßrige Lösung (im Falle einer wasserlöslichen Type) auf den Vliesstoff aufgesprüht. Ferner ist es möglich, ihn als Schaummischung (im Falle einer wasserunlöslichen Type) einzusetzen, was besonders einfach ist, da das Aufschäumen der wäßrigen Lösung ohne jeglichen Zusatz an Schaumhilfsmitteln einfach durch Einschlagen von Luft erfolgen kann.

Die für den Einzelfall erforderliche Bindemittelmenge für das Fixieren des Quellpuders am Vliesstoff muß durch Vorversuche ermittelt werden, wobei gemessen wird, bis zu welcher Obergrenze beim Kontakt mit Superabsorber dieser gerade leicht anquillt. Diese Vorversuche erfordern jedoch keinen nennenswerten technischen oder zeitlichen Aufwand.

Auf den noch nassen Bindemittelauftrag werden 15 bis 40 g/m² Superabsorber-Pulver gestreut. Dieses entzieht dem Bindemittel sofort das Wasser und quillt an der Kontaktfläche gerade leicht an, wobei es am Vliesstoff anhaftet. Direkt anschließend wird zwischen 120 bis 160°C heißen Kontaktflächen das Flächengebilde getrocknet, somit der Superabsorber am Träger fixiert und auch gleichzeitig seine Oberfläche etwas geglättet.

Im nachfolgenden Arbeitsgang wird die Superabsorber-Fläche mit einem zweiten Bindemittelauftrag versehen mit darauffolgender Trocknung in der Wärme unter Wasserentzug.

Dabei druckt man den zweiten Bindemittelauftrag als wäßrige Paste mit einer Viskosität von 16 000 bis 20 000 cP mittels einer Schablonen-Rotationsdruckvorrichtung auf die Superabsorber-Schicht als wiederkehrendes Muster auf. Man verwendet eine Schablone, die eine Druckfläche von 10 bis 20 % aufweist und ein gleichmäßiges Druckmuster in Form von Punkte, Linien oder Stegen erzeugt. Danach erfolgt die Trocknung.

Es entsteht ein leicht erhabenes, wiederkehrendes Druckmuster.

Soll eine Kabelbandage mit einem Flächendurchgangswiderstand von max. 5 000 Ohm.cm² nach DIN 53 482/VDE 0303, Teil 3.6, Ausgabe 5 (1983) hergestellt werden, so mischt man auch der Bindemittelpaste einfach vor dem Bedrucken in bekannter Weise 50 bis 200 Gew.-% (trocken) homogen verteilten, feinkörnigen Ruß bei.

Die Herstellung der Variante einer Kabelbandage, bei der das Druckmuster mit dem Superabsorber eine ebene Fläche bildet, erfolgt dadurch, daß man die erwähnte Vliesstoff-Trägerschicht in einem Arbeitsgang mit einer wäßrigen Bindemittelpaste bedruckt, die eine Viskosität von 16 000 bis 20 000 cP aufweist. Das Drucken erfolgt wieder mit einer Schablonen-Rotationsdruckvorrichtung, wobei die Schablone eine Druckfläche von 10 bis 20 % aufweist und ein gleichmäßiges Druckmuster in Form von Punkten, Linien oder Stegen erzeugt.

Direkt danach werden höchstens 3 g/m² (trocken) eines Bindemittels in 5 % wäßriger Lösung durch Aufsprühen oder als wäßrige Schaummischung aufgetragen, anschließend auf das noch nasse Bindemittel Superabsorber-Pulver in einer Menge von 15 bis 20 g/m² aufgestreut und im folgenden das beschichtete Material zwischen Kontaktflächen bei 120 bis 160° getrocknet. Gleichzeitig wird der gesamte Auftrag geglättet und am Träger fixiert.

Es resultiert eine besonders glatte, ebene, nicht abrasive Oberfläche, bei der dennoch wesentliche Flächenanteile des Superabsorbers für Wasserzutritt frei zugänglich sind.

Die Quellfähigkeit beider erfindungsgemäßen Varianten wurde folgendermaßen getestet: Eine horizontal liegende, scheibenförmige Probe wird durch einen in seiner Höhe beweglichen Stempel geringstmöglich (2,5 g/cm²) belastet und im Überschuß mit destilliertem Wasser an einer vorbestimmten Stelle beaufschlagt. Die Zeit und Höhenverschiebung des Stempels während der Quellung werden gemessen.

Sowohl die Probe mit erhabenem Druckmuster als auch die glattflächige Variante erreichen 90 % ihrer Endquellhöhe innerhalb einer Minute. Ihre Abriebfestigkeiten sind derart gut, daß das Quellmedium im trockenen Zustand auch durch Ankratzen der Oberfläche der Bandage mit dem Fingernagel nicht wesentlich auspudert.

## Patentansprüche

1. Quellfähige Kabelbandage, bestehend aus einer Vliesstoff-Trägerschicht, einer mit Bindemittel auf einer Seite dieser Trägerschicht befestigten Quellmedium-Beschichtung Superabsorber, in Pulverform mit einer Auftragsmenge von 15 bis 40 g/m²,
dadurch gekennzeichnet, daß der Superabsorber mit höchstens 3 g/m² flächigem Bindemittelauftrag auf einer Seite des Vliesstoffträgers fixiert ist und auf der Superabsorber-Schicht ein zweites Bindemittel als gleichmäßiges, sich wiederholendes Druckmuster in Form von Punkten, Linien oder Stegen vorliegt, 10 bis 20 % der Oberfläche der Superabsorber-Schicht bedeckt, und daß die Quellfähigkeit bei Wasserzutritt binnen einer Minute mindestens 90 % des Endwertes der Quellhöhe des Bandagenquerschnitts beträgt.

2. Kabelbandage nach Anspruch 1, dadurch gekennzeichnet, daß das Druckmuster des Bindemittels mit der Superabsorber-Beschichtung eine im wesentlichen ebene Fläche bildet.

3. Kabelbandage nach einem der vorhergehenden Ansprüche, dadurch gekennzeichnet, daß sowohl die Vliesstoff-Trägerschicht als auch der Druckmuster-Auftrag so viel Rußpartikeln eingelagert enthält, daß die Bandage einen elektrischen Flächendurchgangswiderstand R_{A} nicht über 5 000 Ohm.cm² aufweist, gemessen nach DIN 53 482/VDE 0303, Teil 3.6, Ausgabe 5 (1983).

4. Verfahren zur Herstellung einer Kabelbandage in einer Ausführungsform gemäß Anspruch 1 bis 3, bei dem man auf eine Fläche einer möglichst dünnen Vliesstoff-Trägerschicht mit einer Längszugfestigkeit von 150 bis 200 N/5 cm höchstens 3 g/m², trocken, eines Bindemittels in 5 %iger wäßriger Lösung durch Aufsprühen oder als wäßrige Schaummischung aufträgt,
bei dem man auf das noch nasse Bindemittel Superabsorber-Pulver in einer Menge von 15 bis 40 g/m² aufstreut und bei dem man im folgenden das beschichtete Material zwischen Kontaktflächen bei 120 bis 160°C trocknet und gleichzeitig den Superabsorber leicht glättet und am Träger fixiert,
bei dem man danach die Superabsorber-Fläche mit einem zweiten Bindemittelauftrag versieht mit darauffolgender Trocknung in der Wärme unter Wasserentzug, wobei man den zweiten Bindemittelauftrag als wäßrige Paste mit einer Viskosität von 16 000 bis 20 000 cP mittels einer Schablonen-Rotationsdruckvorrichtung auf die Superabsorberschicht als wiederkehrendes Muster aufdruckt und dabei eine Schablone verwendet, die eine Druckfläche von 10 bis 20 % aufweist und ein gleichmäßiges Druckmuster in Form von Punkten, Linien oder Stegen erzeugt, wonach die Trocknung erfolgt.

5. Verfahren zur Herstellung einer Kabelbandage in einer Ausführungsform gemäß Anspruch 1 bis 3, bei dem man auf eine Fläche einer möglichst dünnen Vliesstoff-Trägerschicht mit einer Längszugfestigkeit von 150 bis 200 N/5 cm eine wäßrige Bindemittelpaste aufdruckt mit einer Viskosität von 16 000 bis 20 000 cP mittels einer Schablonen-Rotationsdruckvorrichtung,
wobei man das Bindemittel aufträgt mittels einer Schablone, die eine Druckfläche von 10 bis 20 % aufweist und ein gleichmäßiges Druckmuster in Form von Punkten, Linien oder Stegen erzeugt,
bei dem man anschließend höchstens 3 g/m², trocken, eines Bindemittels in 5 %iger wäßriger Lösung durch Aufsprühen oder als wäßrige Schaummischung aufträgt, anschließend auf das noch nasse Bindemittel Superabsorber-Pulver in einer Menge von 15 bis 40 g/m² aufstreut
und im folgenden das beschichtete Material zwischen Kontaktflächen bei 120 bis 160°C trocknet und gleichzeitig den gesamten Auftrag glättet und am Träger fixiert.

## Claims

1. A swellable cable binding, composed of a nonwoven carrier layer, a swelling medium coating, superabsorber, fixed in powder form in an applied quantity of 15 to 40 g/m² to one side of this carrier layer by means of a binder, characterized in that the superabsorber is fixed to one side of the nonwoven carrier by at most 3 g/m² of binder applied to the surface and, on the superabsorber layer, a second binder is present as an even, recurrent printed pattern in the form of dots, lines or webs and covers 10 to 20 % of the surface area of the superabsorber layer, and that the swelling capacity in the event of ingress of water amounts within one minute to at least 90 % of the final value of the swelling height of the cross-section of the binding.

2. A cable binding according to claim 1, characterized in that the printed pattern of the binder with the superabsorber coating forms a substantially flat surface.

3. A cable binding according to any of the preceding claims, characterized in that both the nonwoven carrier layer and the applied printed pattern contain such a quantity of incorporated carbon black particles that the binding shows an electrical surface resistivity R_{A} of not more than 5000 ohm.cm², measured according to DIN 53 482/VDE 0303, part 3.6, 5th edition (1983).

4. A method for producing a cable binding in an embodiment according to any of claims 1 to 3, wherein at most 3 g/m², in the dry state, of a binder in a 5 % aqueous solution are applied by spraying or as an aqueous foam mixture to one surface of a nonwoven carrier layer which is as thin as possible and has a longitudinal tensile strength of 150 to 200 N/5 cm, wherein a quantity of 15 to 40 g/m² of superabsorber powder is sprinkled onto the still wet binder and wherein subsequently the coated material is dried at 120 to 160°C between contact surfaces and simultaneously the superabsorber is lightly smoothed and fixed to the carrier, wherein the superabsorber surface is then provided with a second application of binder with subsequent hot drying with removal of water, the second application of binder being printed in a recurrent pattern as an aqueous paste having a viscosity from 16,000 to 20,000 cP by means of a rotary stencil printing device onto the superabsorber layer, a stencil being used in this case which has a printing area of 10 to 20 % and produces an even printed pattern in the form of dots, lines or webs, whereupon drying is carried out.

5. A method for producing a cable binding in an embodiment according to any of claims 1 to 3, wherein an aqueous binder paste having a viscosity from 16,000 to 20,000 cP is printed by means of a rotary stencil printing device onto one surface of a nonwoven carrier layer which is as thin as possible and has a longitudinal tensile strength from 150 to 200 N/5 cm, the binder being applied by means of a stencil which has a printing area of 10 to 20 % and produces an even printed pattern in the form of dots, lines or webs, wherein subsequently at most 3 g/m² of a binder, in the dry state, in a 5 % aqueous solution is applied by spraying or as an aqueous foam mixture, superabsorber powder in a quantity of 15 to 40 g/m² is then sprinkled onto the still wet binder and the coated material is then dried at 120 to 160°C between contact surfaces and simultaneously the entire application is smoothed and fixed to the carrier.

## Revendications

1. Bandage gonflable pour câbles, se composant d'une couche porteuse en matière en nappe, d'un recouvrement d'agent de gonflement, superabsorbeur p, fixés à l'aide d'un liant sur un côté de cette couche porteuse, et sous forme d'une poudre déposée en quantité de 15 à 40 g/m², caractérisé en ce que le superabsorbeur est fixé au moyen d'un dépôt de liant au maximum de 3 g/m² de surface sur un côté du support en matière en nappe et il est prévu sur la couche de superabsorbeur un second liant sous forme d'un modèle imprimé uniforme, répétitif et se présentant sous la forme de points, de lignes ou de barrettes, pour recouvrir de 10 à 20 % de la surface de la couche de superabsorbeur, et en ce que l'aptitude de gonflement dans le cas d'une pénétration d'eau s'élève, en moins d'une minute, au minimum à 90 % de la valeur finale du degré de gonflement de la section de bandage.

2. Bandage pour câbles selon la revendication 1, caractérisé en ce que le modèle imprimé du liant constitue avec le revêtement de superabsorbeur une surface sensiblement plane.

3. Bandage pour câbles selon une des revendications précédentes, caractérisé en ce qu'aussi bien la couche porteuse de matière en nappe que le dépôt de modèle imprimé contiennent suffisamment de particules de suie incorporées pour que le bandage ait une résistance électrique surfacique R_{A} qui ne soit pas supérieure à 5 000 ohms.cm², mesurée d'après la norme DIN 53 482/VDE 0303, Partie 3.6., 5ème édition (1983).

4. Procédé de fabrication d'un bandage pour câbles dans une forme de réalisation selon les revendications 1 à 3, dans lequel on dépose sur une surface d'une couche porteuse en matière en nappe aussi mince que possible et ayant une résistance longitudinale à la traction de 150 à 200 N/5 cm, au maximum 3 g/m², à sec, d'un liant dans une solution aqueuse à 5 % par pulvérisation ou bien sous la forme d'un mélange de mousse aqueuse, procédé dans lequel on répartit sur le liant encore humide de la poudre de superabsorbeur en quantité comprise entre 15 et 40 g/m², et dans lequel on effectue ensuite un séchage de la matière recouverte en opérant entre 120 et 160° C entre des surfaces de contact et simultanément on lisse légèrement le superabsorbeur et on le fixe sur le support, et ensuite on dépose sur la surface de superabsorbeur une seconde couche de liant en opérant ensuite un séchage à chaud avec enlèvement d'eau, puis on imprime le second dépôt de liant sous forme d'une pâte aqueuse ayant une viscosité de 16 000 à 20 000 cP, au moyen d'une presse rotative à pochoir, sur la couche de superabsorbeur sous la forme d'un modèle répétitif et on utilise alors un pochoir qui a une surface d'impression de 10 à 20 % et qui produit un modèle imprimé uniforme sous la forme de points, de lignes ou de barrettes, et ensuite le séchage est effectué.

5. Procédé de fabrication d'un bandage pour câbles dans une forme de réalisation selon les revendications 1 à 3, dans lequel on imprime sur une surface d'une couche porteuse en matière en nappe aussi mince que possible et ayant une résistance longitudinale à la traction de 150 à 200 N/5 cm, une pâte aqueuse de liant ayant une viscosité de 16 000 à 20 000 cP au moyen d'une presse rotative à pochoir, on dépose le liant au moyen d'un pochoir qui a une surface d'impression de 10 à 20 % et qui produit un modèle imprimé uniforme se présentant sous la forme de points, de lignes ou de barrettes, procédé dans lequel on dépose ensuite au maximum 3 g/m² (à sec) d'un liant dans une solution aqueuse à 5 % par pulvérisation ou bien sous la forme d'un mélange de mousse aqueuse, ensuite on répartit sur le liant encore humide de la poudre de superabsorbeur en quantité comprise entre 15 et 40 g/m² et ensuite la matière revêtue est séchée entre des surfaces de contact en opérant entre 120 et 160° C et simultanément l'ensemble du dépôt est lissé et est fixé sur le support.
